# EUROPEAN PATENT APPLICATION

(11) **EP 4 632 634 A1**
(43) Date of publication of application: **15.10.2025**
(21) Application number: 24305571.2
(22) Date of filing: 09.04.2024
(51) Int. Cl.: G06N 10/40

(54) **SYSTEM FOR OPTICALLY ADDRESSING QUBITS IN AN ARRAY OF QUBITS, CORRESPONDING QUANTUM COMPUTING DEVICE AND METHOD**

(71) Applicant: Pasqal, 91300 Massy (FR)
(72) Inventor: DAREAU, Alexandre, 91300 MASSY (FR)
(74) Representative: Lavoix

(57) **Abstract**

An addressing system (25) for optically addressing qubits (20) in a qubit array (15), comprises an interferometric device (50),the interferometric device (50) comprising a main array (65) of main mirrors (70-i) being independently movable in translation along a longitudinal direction (X) such that the main array (65) is configured for spatial light modulation, the interferometric device (50) being configured for forming a reference light beam (55) from at least part of an incident light beam (45) and a spatially phase modulated light beam (60) by applying a phase mask on at least part of the incident light beam (45) with the main array (65), and for interfering the reference light beam and the spatially phase modulated light beam to form an addressing light beam (40) for irradiating at said qubits (20) with a respective partial addressing light beam (40-i), the intensity of which depends on a position (Xi) of a respective main mirror (70-i) chosen according to addressing data.

## Description

### TECHNICAL FIELD OF THE INVENTION

The present invention concerns a system for optically addressing qubits in an array of qubits. The present invention also concerns a quantum computing device comprising such a system. The present invention also relates to a method for optically addressing qubits in an array of qubits.

### BACKGROUND OF THE INVENTION

Current quantum computers based on trapped neutral atoms as qubits provide a promising platform for quantum computing.

Executing quantum gate operations of a quantum circuit defining a quantum algorithm requires accurate, fast and scalable optical addressing of the trapped qubits.

WO2019014589 describes a neutral atom computer comprising trapped qubits which are addressed by spatially controlling optical beams using acousto-optic deflectors (AODs).

AOD-based controlling of light beams only provides a limited bandwidth for spatial modulation. Moreover, addressing qubits based on arbitrary qubit illumination patterns is difficult using AODs.

Other techniques to optically address qubits include the use of spatial light modulators (SLMs).

For example, WO2021112948 describes a method for addressing qubits of a qubit quantum computer using holograms.

This method requires encoding layers of gate operations of a quantum circuit into holograms displayed on a slow segmented SLM, which may be used to produce spatial optical distributions that are used to operate on the qubit array.

The characteristic time for refreshing the holographic pattern is typically of the order of a couple of milliseconds typically about ten milliseconds, which is too slow for many applications.

### SUMMARY OF THE INVENTION

Hence, one aim of the invention is to provide improved optical qubits addressing systems, in particular allowing faster individual optical addressing of multiple qubits in a qubit array for quantum computation.

To this aim, the invention relates to a system for optically addressing qubits in a qubit array, the system comprising an interferometric device, the interferometric device comprising a main array of main microelectromechanical mirrors called main mirrors, each main mirror being independently movable in translation along a longitudinal direction such that the main array is configured for spatial light modulation, the interferometric device being configured for:
a) forming:
   - a reference light beam, from at least part of an incident light beam configured for irradiating the interferometric device, and
   - a spatially phase modulated light beam, by applying a phase mask on at least part of the incident light beam with the main array, and
b) interfering the reference light beam and the spatially phase modulated light beam to form an addressing light beam which is spatially intensity modulated, the addressing light beam being configured for irradiating at least one of said qubits with a respective partial addressing light beam, the intensity of the partial addressing light beam received by the respective qubit depending on a position of a respective main mirror along the longitudinal direction, said position being chosen according to addressing data.

The independent positioning of the main mirrors allows spatial phase modulation of at least part of the incident light beam.

The micro-machined electromechanical main mirrors implemented in the interferometric device may have a short response time, of the order of a few microseconds or of a few tens of microseconds.

Thus, the reconfiguration of the main array by repositioning one or more main mirrors along the longitudinal direction, and as a consequence the reconfiguration of the spatial phase modulation of the modulated light beam, is fast.

The interferometric device allows conversion of the spatial modulation of the phase of the light beam reflected on the main array into spatial modulation of the intensity of the addressing light beam configured to be focused on the qubit array.

Consequently, each atom of the qubit array can be irradiated with a light intensity which depends on the position of at least one respective mirror, this intensity being controlled with a short response time.

Further, the intensity can be varied in a predetermined continuous range, allowing to target different superposition of states for the qubit.

According to other advantageous aspects of the invention, the system for optically addressing qubits in a qubit array comprises one or more of the following features, taken in isolation or in any technically possible combination:
- the addressing system further comprises a classical computer configured for determining the position of at least one main mirror based on the addressing data and for controlling the positioning of said main mirror at the determined position;
- the classical computer is further configured for controlling the position of each of the main mirrors incrementally or continuously between a respective proximal position and a respective distal position;
- the addressing system further comprises a classical computer for controlling, based on the addressing data, a light source configured for forming the incident light beam;
- the addressing system further comprises a main imaging system configured for focusing the addressing light beam on the qubit array.
- the interferometric device is of the amplitude division type;
- the interferometric device comprises a Michelson interferometer, the main array being positioned in a first arm of the Michelson interferometer, the spatially phase modulated light beam being formed from a part of the incident light beam which travels along the first arm, and the reference light beam being formed from a part of the incident light beam which travels along a second arm of the Michelson interferometer;
- the interferometric device comprises a calibration array of secondary microelectromechanical mirrors, the calibration array being positioned in the second arm, the calibration array being configured for compensating spatial inhomogeneities in the incident light beam and/or spatial inhomogeneities in the spatially phase modulated light beam formed when all the main mirrors are positioned at a calibration position along the longitudinal direction ;
- the interferometric device comprises a phase-contrast device, the phase-contrast device comprising at least one phase plate and an intermediate imaging system, the phase plate being conjugated by the intermediate imaging system with a calibration position of the main array, the phase-contrast device being configured for forming the reference light beam by phase-shifting of a plane wave part of the reflected light beam corresponding to the incident light beam after reflection on the main array;
- the main imaging system is further configured for conjugating the phase plate and the qubit array to be addressed;
- the interferometric device further comprises an optical circulator for changing a propagation direction of the incident light beam;
- the addressing system further comprises a light source configured for emitting the incident light beam towards the interferometric device;
- each qubit comprises at least one trapped particle that can be placed at least in a ground state and one excited Rydberg state, and optionally one or more additional states corresponding to hyperfine levels of energy.

The invention further relates to a quantum computer device comprising a quantum qubit register comprising an array of qubits and a system for optically addressing qubits of said array of qubits according to any of the preceding embodiments.

The invention further relates to a method for optically addressing qubits in a qubit array with the addressing system according to any of the preceding embodiments, the method comprising:
a) determining a position of at least one main mirror along the longitudinal direction according to the addressing data;
b) positioning the at least one main mirror along the longitudinal direction according to the respective determined position, and
c) irradiating the interferometric device with an incident light beam.

### BRIEF DESCRIPTION OF THE DRAWINGS

The invention will be easier to understand in view of the following description, provided solely as an example and with reference to the appended drawings in which:
- Figure 1 is a schematic view of an example of a quantum computing device according to the invention;
- Figure 2 is a partial schematic view of a first embodiment of the addressing system of the quantum computing device of figure 1, and
- Figure 3 is a schematic view of a second embodiment of the addressing system of the quantum computing device of figure 1.

### DETAILED DESCRIPTION OF SOME EMBODIMENTS

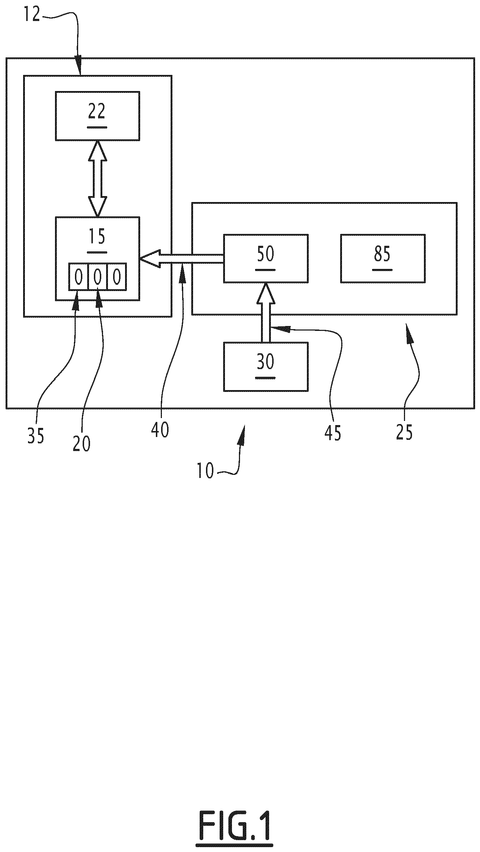

A quantum computing device 10 according to the invention is schematically illustrated in figure 1.

The quantum computing device 10 comprises a quantum qubit register 12 comprising a qubit array 15 of qubits 20, as well as hardware 22 for manipulating these qubits 20 (e.g., for assembling the quantum register and/or reading or modifying the state of some or all of the qubits 20), an addressing system 25 for optically addressing one or more of the qubits 20, and a light source 30 for irradiating the addressing system 25.

The quantum qubit register 12 is not shown in detail in the figures. The quantum processor is adapted to perform quantum operations on the qubit array 15.

The quantum qubit register 12 uses the quantum properties of matter, such as superposition and entanglement, to perform operations on data. Unlike a classical computer based on transistors working on binary data (coded on bits, 0 or 1), the quantum qubit register 12 works on the qubits 20 whose quantum state can take a continuous rather than discrete number of values.

As an example, a qubit 20 refers to a two-level quantum mechanical system.

For example, a qubit 20 comprises two basic quantum states |0> and |1> representing the possible quantum states of the qubit 20. According to the superposition principle of quantum mechanics, any superposition of the form a 10> + b |1> (a and b being complex numbers and aa*+bb*=1) is a possible quantum state of the qubit 20.

More generally, n-state quantum systems, also called qubits, may be used as a quantum computational unit of the quantum qubit register 12. Although the embodiments are described with reference to qubits, they are not limited thereto and can also be used to optically address qubits in a qubit array.

A given qubit 20 may be implemented on the basis of a single quantum particle 35 such as a single atom or ion, or a group of quantum particles.

In an example, the particle is a polarizable particle sensitive to alternative current (ac-)Stark shift from lasers.

The particle is preferably a neutral atom of the alkali family or alkaline earth family such as Rubidium atoms, Strontium atoms, Ytterbium atoms or Cesium atoms.

The qubit array 15 may be generated by trapping particles 35 in optical trapping sites with a generator (not shown).

In an example of implementation, the generator of trapping sites comprises a laser source, or equivalent, able to generate a laser beam and a beam shaper able to shape the laser beam (e.g., to impart a specific intensity pattern to the laser beam) so as to obtain an array 15 of trapping sites for particles 35 when the laser beam is focused. The beam shaper is, for example, a spatial light modulator (SLM).

The detector is configured to detect the presence of particle(s) in the qubit array 15. The detector is, for example, a camera such as a charge-coupled device (CCD) camera, or an Electron-Multiplying CCD (EMCCD) camera, or any suitable imaging technology. For example, in the case of atoms, the camera is suitable to detect the fluorescence emitted from the atoms.

The rearrangement unit (optional) is configured for moving particles 35 from one trapping site to another trapping site. The rearrangement unit may comprise a generator of optical moving tweezers.

The generator of optical moving tweezers comprises for example a laser source or equivalent, able to generate a laser beam and a beam shaper able to shape the laser beam (e.g., to impart a specific intensity pattern to the laser beam) so as to obtain an array of optical moving tweezers for particles 35 when the laser beam is focused. The beam shaper is, for example, a spatial light modulator (SLM).

Examples of suitable quantum registers based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, September 2020. ISSN 2521-327X. doi:10.22331/q-2020-09-21-327. Other embodiments are nonetheless possible.

Preferably, a given qubit 20 of the qubit array 15 comprises at least one trapped particle 35 that can be placed at least in a ground state and an excited Rydberg state, and optionally one or more additional states corresponding to hyperfine levels of energy.

The qubit array 15 may be a one dimensional, two dimensional or three-dimensional geometrical arrangement.

Typically, the distance between the quantum particles is selected so that interaction between the quantum particles is possible. For example, when using neutral atoms as qubits 20, the distance between the particles may be of the order of micrometers so that qubits can interact when they are in the Rydberg state.

The qubits 20 can be controlled and manipulated by optically addressing the individual qubits 20 with an addressing light beam 40 emerging from the addressing system 25 in response to an incident light beam 45 emitted by the light source 30 and configured for irradiating the interferometric device 50.

To this end, the light source 30 may be a laser light source.

Advantageously the incident light beam 45 is an approximately parallel beam and can be modeled as a plane wave propagating along an incident direction Y.

Typically, an individual exposure of a qubit 20 is based on one or more laser pulses of the light source 30 of a certain amplitude and duration, typically in the range of microseconds.

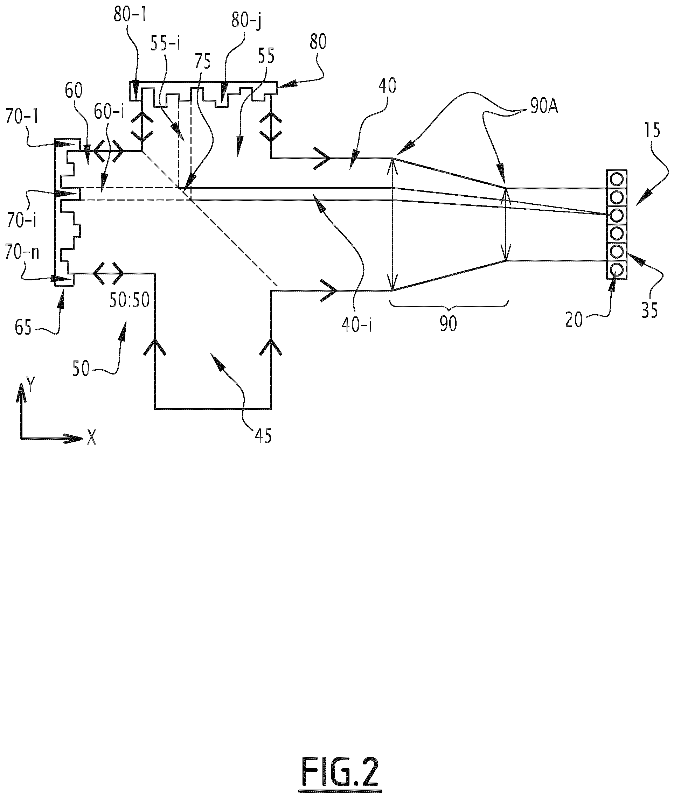

The addressing system 25 is schematically illustrated in figure 2. The addressing system 25 comprises an interferometric device 50.

The interferometric device 50 is configured for:
a) forming:
   - a reference light beam 55 from at least part of the incident light beam 45, and
   - a spatially phase modulated light beam 60, by applying a phase mask on at least part of the incident light beam 45 with a main array 65 of main mirrors 70-i, and
b) interfering the reference light beam 55 and the spatially phase modulated light beam 60, to form the addressing light beam 40.

To this end, the interferometric device 50 comprises the main array 65 of main mirrors 70-i.

The main array 65 is configured for spatial phase modulation of at least part of the incident light beam 45.

The main array 65 comprises a plurality of main microelectromechanical mirrors 70-i, i being an integer ranging from 1 to an integer n (n being the number of mirrors in the array, hereafter called main mirrors 70-i (illustrated as 70-1, 70-i and 70-n on Figure 2).

Each main mirror 70-i is independently movable in translation along a longitudinal direction X and extends in a plane orthogonal to the longitudinal direction X.

The longitudinal direction X may be orthogonal to the incident direction Y.

A position Xi of a given main mirror 70-i along the longitudinal direction X can for example vary continuously or incrementally between a distal position Xi,min and a proximal position Xi,max. Typically the distance Xi,minXi,max between the distal position Xi,min and the proximal position Xi,max is of the order of a wavelength of the incident light beam 45.

A respective part of the incident light beam 45 which is reflected on a given main mirror 70-i, called partial reflected light beam 60-i, has a respective phase which depends on the position Xi of the respective main mirror 70-i.

Typically, the respective phase can be continuously or incrementally varied from 0 to 2π radians, by varying the position Xi continuously or incrementally over a range of one wavelength of the incident light beam 45.

As a consequence, one understands that the main array 65 applies a phase mask on the part of the incident light beam 45 received, the phase mask depending on the positions Xi of the main mirrors 70-i along the longitudinal direction X. This allows forming the spatially phase modulated light beam 60 after reflection of at least part of the incident light beam 45 on the main array 65.

In a first embodiment, the interferometric device 50 is of the amplitude division type, and comprises for example a Michelson interferometer as shown in figure 2.

In this case, the interferometric device 50 comprises splitting means (or a splitter) for dividing an amplitude of the incident light beam 45 into a first partial beam configured for reflection on the main array 65, and a second partial beam, which subsequently forms the reference light beam 55.

In the example of figure 2, the splitting means is an non polarizing beamsplitter 75, such as a half-silvered mirror.

The non polarizing beamsplitter 75 is for example a 50/50 intensity splitter.

In the example of figure 2, the main array 65 is positioned in a first arm of the interferometric device 50. Hence, the spatially phase modulated light beam 60 is formed from the first partial beam which travels along the first arm along the longitudinal direction X after partial reflection of the incident light beam 45 on the half-silvered mirror 75, and after subsequent reflection of the first partial beam on the main array 65.

In this case, the reference light beam 55 is formed from the second partial beam which travels along a second arm of the Michelson interferometer after partial transmission of the incident light beam 45 by the half-silvered mirror 75 along the incident direction Y, and after subsequent reflection of the second partial beam on a secondary mirror 80.

The secondary mirror 80 can be a planar mirror extending in a plane orthogonal to the incident direction Y.

Alternatively, as shown in figure 2, the second mirror 80 can be a calibration array 80 of secondary microelectromechanical mirrors 80-j, j being an integer ranging from 1 to an integer p (p being the number of secondary mirrors), hereafter called secondary mirrors 80-j (illustrated as 80-1 and 80-j on Figure 2). The integer p is for example equal to the integer n.

Each secondary mirror 80-j is independently movable in translation along the incident direction Y and extends in a plane orthogonal to the incident direction Y.

The calibration array 80 is configured for compensating spatial inhomogeneities in the incident light beam 45 and/or spatial inhomogeneities in the spatially phase modulated light beam 60 formed when all the main mirrors 70-i are positioned at a calibration position along the longitudinal direction X.

For example, when all the main mirrors 70-i are at their calibration position, for example their distal position X_min, if the spatially phase modulated light beam 60 formed in response to a plane wave incident light beam 45 is not a plane wave light beam, appropriate compensation is applied by determining a compensating position of one more secondary mirrors 80-j along the incident direction Y for subsequent operation of the addressing system 25.

At an outlet of the interferometric device 50 along the longitudinal direction X, the reference light beam 55 (after reflection on the half-silvered mirror 75) and the spatially phase modulated light beam 60 (after transmission by the half-silvered mirror 75) interfere.

As a consequence, the addressing light beam 40 is obtained.

The addressing light beam 40 is configured for irradiating at least one of said qubits 20 with a respective partial addressing light beam 40-i, the intensity of the partial addressing light beam 40-i received by the respective qubit 20 depending on the position Xi of a respective main mirror 70-i along the longitudinal direction X, said position Xi being chosen according to addressing data.

In the example of figure 2, the addressing light beam 40 propagates along the longitudinal direction X.

The addressing light beam 40 is spatially intensity modulated.

In particular, for each main mirror 70-i, the intensity of the respective part of the addressing light beam 40, which is the so-called partial addressing light beam 40-i, depends on a difference between a respective phase of the respective part 60-i of the spatially phase modulated beam 60 and a respective phase of a respective interfering part 55-i of the reference light beam 55.

Hence, the intensity of the respective partial addressing light beam 40-i effectively depends on the position Xi of the respective main mirror 70-i.

For a given main mirror 70-i, the intensity of the respective partial addressing light beam 40-i can be varied continuously or incrementally from a minimum intensity Imin to a maximum intensity Imax, by varying the position Xi continuously or incrementally over a spatial range of one wavelength of the incident light beam 45.

In other words, the interferometric device 50 converts information on the respective positions Xi of the main mirrors 70-i into a phase information carried by the spatially phase modulated light beam 60 and then into an intensity information carried by the addressing light beam 40.

The addressing system 25 can comprise a classical computer 85 configured for determining the position Xi of at least one main mirror 70-i based on the addressing data and for controlling the positioning of said main mirror 70-i at the determined position Xi.

In an embodiment, the addressing data may include at least one illumination pattern.

A given illumination pattern identifies the qubits 20 in the qubit array 15 that need to be optically addressed at a time instance, and optionally the required intensity.

Here, the term illumination pattern refers to information (in any format) defining qubits 20 in the qubit array that need to be optically addressed for any purpose, e.g. calibration, initialization, control, off-resonance, single gate operation, multi gate operation.

Typically, an illumination pattern may define an arbitrary selection of qubits 20 in the qubit array 15 that need to be optically addressed simultaneously, and optionally a respective intensity of the irradiating light.

In an embodiment, the addressing data may represent qubit 20 operations, e.g. single qubit operations and/or multiple (e.g. two) qubit operations.

In an embodiment, the illumination pattern may represent a plurality of single-, two- or multi qubit operations, which can be executed by the quantum computing device 10 at high speed.

In further embodiments, the addressing data may be used to identify qubits that need to be optically addressed for other reasons, e.g. to prepare, e.g. calibrate or initialize qubits in the qubit array.

In other embodiments, one or more illumination patterns may be used to identify a large group of qubits to achieve entanglement between the optically addressed group of qubits. Such addressing may be used when using the atomic quantum register for analog quantum computation schemes or for digital-analog quantum computation schemes.

An electronic control system 85 such as a classical computer 85 may be configured to convert qubit operations in a quantum circuit to a sequence of illumination patterns representing information identifying which qubits need to be addressed, which is subsequently used by the computer 85 to control the positioning of the main mirrors 70-i to expose predetermined qubits 20 in the qubit array 15.

To execute the qubit operations, the classical computer 85 may be configured for controlling the light source 30 according to the sequence of illumination patterns, and thus for controlling, based on the addressing data, the irradiation of the interferometric device with the incident light beam 45.

Alternatively, the light source 30 can be controlled with another classical computer than the classical computer 85 configured for controlling the positioning of the main mirrors 70-i.

The addressing system 25 can further comprise a main imaging system 90 configured for focusing the addressing light beam 40 on the main array 20.

In particular, for each main mirror 70-i, the main imaging system 90 is configured for focusing the respective partial addressing light beam 40-i on at least one respective particle 35. This allows to configure the quantum state of the respective qubit 20 based on the position Xi of the respective main mirror 70-i.

In the example of figure 2, the main imaging system 90 comprises a plurality of lenses 90A.

The light beam focused on the qubit array 15 may have an intensity profile such that the light only interacts with the individual qubit 20 without affecting neighboring qubits 20.

In particular, the addressing system 25 may comprise filtering means configured for filtering higher order interference in the addressing light beam 40 and/or for preventing or suppressing cross-talk between the main mirrors 70-i.

When an individual qubit 20 is optically addressed, the light may resonantly interact with the qubit 20.

Alternatively, the light might tune the individually addressed qubit 20 out of resonance with respect to the driven transition, for instance by inducing state-dependent ac-Stark shift.

Both types of optical addressing can be used for implementing the execution of qubit operations.

In some embodiments, individual optical addressing of qubits 20 may be combined with global addressing using e.g. a laser beam that is configured to expose multiple or even all qubits in the qubit array. Alternatively and/or in addition, a microwave field that interacts with the qubits 20 in the qubit array 15 may be used to globally address qubits.

Hence, a method for optically addressing qubits 20 in a qubit array 15 with the addressing system 25 comprises:
a) determining a position Xi of at least one main mirror 70-i along the longitudinal direction X according to the addressing data;
b) positioning the at least one main mirror 70-i along the longitudinal direction X according to the respective determined position, and
c) irradiating the interferometric device 50 with an incident light beam 45.

The method can be iterated at a given frequency, depending on the operations to be performed with the qubit array 15.

In any case, since the repositioning of the main mirrors 70-i is fast and since no computation of a holographic mask is required, the method and the addressing system 25 according to the invention allows faster quantum computation than prior art methods and devices.

The easy and precise positioning of the main mirrors 70-i between the distal position Xi,min and the proximal position Xi,max allows fine tuning of the quantum state over the Bloch sphere, depending on the operations to be performed.

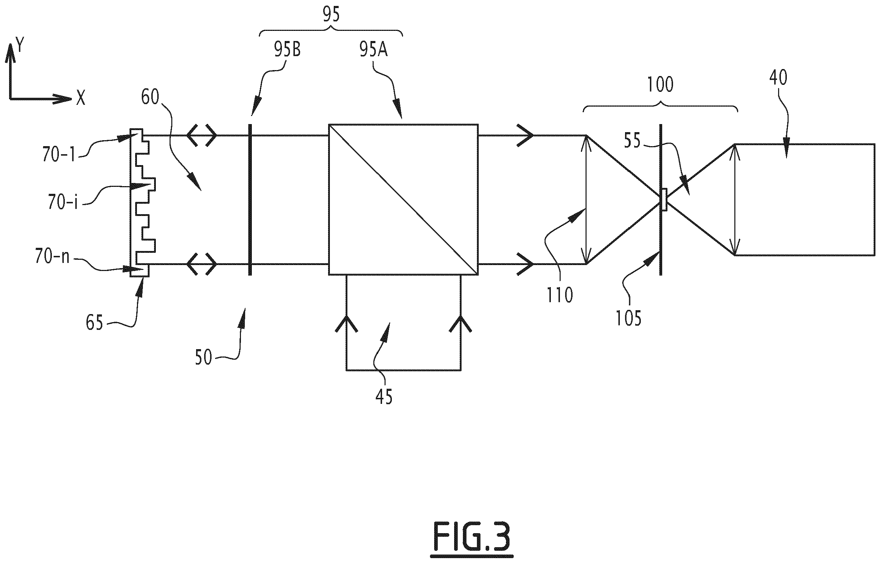

A second embodiment of the interferometric device 50 of the addressing system 25 is shown in figure 3.

In this second example, the interferometric device 50 comprises the main array 65, an optical circulator 95 and a phase-contrast device 100.

The optical circulator 95 is configured for changing the propagation direction of the incident light beam 45 from the incident direction X to an irradiation direction of the main array 65.

The irradiation direction is for example the longitudinal direction Y, as represented in figure 3.

The optical circulator 95 comprises for example a polarizing beam splitter 95A and a quarter-wave plate 95B.

In the same manner as in the first embodiment, the main array 65 applies a phase mask on the incident light beam to form the spatially phase modulated light beam 60.

The phase contrast device 100 is configured for forming the reference light beam 55 by phase shifting of a plane wave part of the reflected light beam corresponding to the incident light beam 45 after reflection on the main array 65.

To this end, the phase-contrast device 100 comprises at least one phase plate 105 and an intermediate imaging system 110.

The phase plate can extend in a plane orthogonal to the longitudinal direction X.

The phase plate 105 is configured for shifting the phase of a fraction of an incident light beam, for example a central fraction of the incident light as shown in figure 3. The phase of a complementary part of the incident light, for example a peripheral part of the incident light, is not affected by the phase plate.

The phase shift is for example equal to π radians.

The phase plate 105 is conjugated by the intermediate imaging system 110 with a calibration position of the main array 65.

The intermediate imaging system 110 allows isolation of the component of lowest spatial frequency in the Fourier plane of the intermediate imaging system.

The intermediate imaging system 110 comprises for example at least one lens.

In this second embodiment, when the interferometric device 50 is irradiated with a plane wave incident light beam 45, the main array 65 receives a plane wave incident light beam emerging from an outlet of the optical circulator 95. As a consequence, a phase-shifted plane wave beam emerges from the phase-contrast device 100, which is the reference light beam 55. At the same time, the part of the incident light which has not been phase-shifted forms the spatially phase modulated light beam 60.

Based on the phase-contrast effect described by Zernicke, due to the phase-shifting, the reference light beam 55 and the spatially phase modulated light beam 60 interfere, so as to form the spatially intensity modulated addressing light beam 40.

The spatial modulation of the intensity of the addressing light beam 40 depends on the respective positions of the main mirrors 70-i. Consequently, the addressing light beam 40 can be used for addressing the qubits 20 in the same manner as in the first embodiment, in particular by means of a main imaging system 90.

The main imaging system 90 can be configured for conjugating the phase plate 105 with the qubit array 15.

The second embodiment does not necessitate fine alignment of the reference and modulated beams, as these beams propagate mostly in common mode and are only separated using the phase-contrast device 100 acting as a spatial frequency discriminating optical system. Consequently, the second embodiment is more robust with regard to potential fluctuations, for example fluctuations induced by temperature changes or mechanical vibrations.

## Claims

1. Addressing system (25) for optically addressing qubits (20) in a qubit array (15), the system comprising an interferometric device (50),
the interferometric device (50) comprising a main array (65) of main microelectromechanical mirrors (70-i) called main mirrors, each main mirror (70-i) being independently movable in translation along a longitudinal direction (X) such that the main array (65) is configured for spatial light modulation, the interferometric device (50) being configured for:
a) forming:
- a reference light beam (55), from at least part of an incident light beam (45) configured for irradiating the interferometric device (50), and
- a spatially phase modulated light beam (60), by applying a phase mask on at least part of the incident light beam (45) with the main array (65), and
b) interfering the reference light beam (55) and the spatially phase modulated light beam (60) to form an addressing light beam (40) which is spatially intensity modulated, the addressing light beam (40) being configured for irradiating at least one of said qubits (20) with a respective partial addressing light beam (40-i), the intensity of the partial addressing light beam (40-i) received by the respective qubit (20) depending on a position (Xi) of a respective main mirror (70-i) along the longitudinal direction (X), said position (Xi) being chosen according to addressing data.

2. Addressing system (25) according to the preceding claim, further comprising a classical computer (85) configured for determining the position (Xi) of at least one main mirror (70-i) based on the addressing data and for controlling the positioning of said main mirror (70-i) at the determined position (Xi).

3. Addressing system (25) according to claim 2, in which the classical computer (85) is further configured for controlling the position (Xi) of each of the main mirrors (70-i) incrementally or continuously between a respective proximal position (Xi,max) and a respective distal position (Xi,max).

4. Addressing system (25) according to any one of the preceding claims, further comprising a classical computer (85) for controlling, based on the addressing data, a light source (30) configured for forming the incident light beam (40).

5. Addressing system (25) according to any of the preceding claims, further comprising a main imaging system (90) configured for focusing the addressing light beam (40) on the qubit array (15).

6. Addressing system (25) according to any of the preceding claims, in which the interferometric device (50) is of the amplitude division type.

7. Addressing system (25) according to claim 6, in which the interferometric device (50) comprises a Michelson interferometer,
the main array (65) being positioned in a first arm of the Michelson interferometer, the spatially phase modulated light beam (60) being formed from a part of the incident light beam which travels along the first arm, and
the reference light beam (55) being formed from a part of the incident light beam which travels along a second arm of the Michelson interferometer.

8. Addressing system (25) according to claim 7, in which the interferometric device (50) comprises a calibration array (80) of secondary microelectromechanical mirrors (80-j), the calibration array (80) being positioned in the second arm, the calibration array (80) being configured for compensating spatial inhomogeneities in the incident light beam (45) and/or spatial inhomogeneities in the spatially phase modulated light beam (60) formed when all the main mirrors (70-i) are positioned at a calibration position along the longitudinal direction (X).

9. Addressing system (25) according to any of claims 1 to 5, in which the interferometric device (50) comprises a phase-contrast device (100), the phase-contrast device (100) comprising at least one phase plate (105) and an intermediate imaging system (110),
the phase plate (105) being conjugated by the intermediate imaging system (110) with a calibration position of the main array (65),
the phase-contrast device (100) being configured for forming the reference light beam (55) by phase-shifting of a plane wave part of the reflected light beam corresponding to the incident light beam (45) after reflection on the main array (65).

10. Addressing system (25) according to claim 9 and claim 5, in which the main imaging system (90) is further configured for conjugating the phase plate (105) and the qubit array (15) to be addressed.

11. Addressing system (25) according to any of claims 9 and 10, in which the interferometric device further comprises an optical circulator for changing a propagation direction of the incident light beam.

12. Addressing system (25) according to any one of the preceding claims, further comprising a light source (30) configured for emitting the incident light beam (45) towards the interferometric device (50).

13. Addressing system (25) according to the preceding claim, in which each qubit (20) comprises at least one trapped particle (35) that can be placed at least in a ground state and one excited Rydberg state, and optionally one or more additional states corresponding to hyperfine levels of energy.

14. A quantum computing device (10) comprising a quantum qubit register (12) comprising a qubit array (15) of qubits (20) and an addressing system (25) for optically addressing said qubits (20) according to any of the preceding claims.

15. Method for optically addressing qubits (20) in a qubit array (15) with the addressing system (25) according to any of claims 1 to 13, the method comprising:
a) determining a position (Xi) of at least one main mirror (70-i) along the longitudinal direction (X) according to the addressing data;
b) positioning the at least one main mirror (70-i) along the longitudinal direction (X) according to the respective determined position, and
c) irradiating the interferometric device (25) with an incident light beam (45).
